Europäisches Patentamt

European Patent Office

Office européen des brevets

(11) Veröffentlichungsnummer: **0 476 405 A1**

# (12) EUROPÄISCHE PATENTANMELDUNG

(21) Anmeldenummer: **91114721.3**

(51) Int. Cl.⁵: **B60L 11/18**

(22) Anmeldetag: **02.09.91**

(30) Priorität: **20.09.90 CH 3057/90**

(43) Veröffentlichungstag der Anmeldung:
**25.03.92 Patentblatt 92/13**

(84) Benannte Vertragsstaaten:
**CH DE FR GB IT LI**

(71) Anmelder: **MASCHINENFABRIK RIETER AG**
**CH-8406 Winterthur(CH)**

(72) Erfinder: **Borgel, Denis**
**Lindaustrasse 28**
**CH-8309 Nürensdorf(CH)**
Erfinder: **Meyer, Urs, Dr.**
**Hohfurristrasse 1**
**CH-8172 Niederglatt(CH)**

(54) **Automatisches Ladungsüberwachungs- und Batteriewechselsystem für elektrisch angetriebene Transportfahrzeuge.**

(57) In einem Transportsystem mit einer Fahrspur (3) sind elektrisch angetriebene Transport- und Handlingfahrzeuge (1, 2) vorhanden. Diese Fahrzeuge (1, 2) beziehen ihre Antriebsenergie aus auswechselbaren Batterien (10, 13, 14) und sie werden automatisch gesteuert. Der Austausch von entladenen Batterien gegen aufgeladene erfolgt nach Prüfung durch die Steuerung mit Hilfe einer Batteriewechselstation (4). Sowohl die Batteriewechselstation (4) wie auch die Transportfahrzeuge (1, 2) verfügen dazu je über eine Datenverarbeitungseinrichtung (17, 12, 22) zur Auswertung von Auftrags-, Fahrweg-, Energieverbrauchs- und Batteriedaten. Die Datenverarbeitungseinrichtungen (12, 22) der Transportfahrzeuge ermitteln bei jedem Fahrauftrag die notwendige Batterieladung und vergleichen diese mit der vorhandenen Ladung. Zusätzlich wird die Batterieladung während der Ausführung des Auftrages überwacht. Die Batterien (10, 13, 14) werden im Normalfalle nur um einen Teil ihrer Nennkapazität entladen und dann wieder aufgeladen. In regelmässigen Intervallen erfolgt ein Ladezyklus mit einer Nachladephase. Das System verhindert Tiefentladungen der Batterien (10, 13, 14) und ermöglicht eine Optimierung der Einsatzdauer der Batterien und der Fahraufträge. Nicht mehr einsatzfähige Batterien (10, 13, 14) werden erkannt und ausgeschieden.

Fig.1

Die Erfindung betrifft ein Verfahren zum Ueberwachen und Steuern des Lade-/Entladevorganges und des Batteriewechsels von auswechselbaren Batterien bei einem elektrisch angetriebenen Transport- und Handlingfahrzeug welches Teil eines im Dauerbetrieb arbeitenden, mindestens teilweise automatischen Transportsystemes ist, wobei im Transportsystem eine Batteriewechselstation mit mehreren Ladeeinrichtungen vorhanden ist und diese Wechselstation vom Transportfahrzeug angefahren wird, die Batterien in dieser Wechselstation ausgetauscht und aufgeladen werden, im Transportfahrzeug und in der Wechselstation mittels elektronischer Datenverarbeitungseinrichtungen Betriebsdaten gespeichert sind und erfasst werden und dem Transportfahrzeug über eine Leitstation Aufträge, insbesondere Fahr-, Transport- und Handlingaufträge übermittelt werden sowie eine Vorrichtung zum Steuern des Lade-/Entladevorganges und des Batteriewechsels von auswechselbaren Batterien bei elektrisch angetriebenen Transportfahrzeugen eines im Dauerbetrieb arbeitenden Transportsystemes.

Bei automatischen Transportsystemen, welche beispielsweise in automatischen Fabrikationsanlagen oder in Textilverarbeitungsanlagen Einsatz finden, werden üblicherweise zur Beförderung von Waren oder Warenbehältern fahrerlose Transportfahrzeuge mit einer automatischen Steuerung eingesetzt. Diese Transportfahrzeuge sind sehr oft mit elektrischen Antrieben ausgestattet, welche ihre Antriebsenergie aus elektrischen Batterien, bzw. Akkumulatoren beziehen. Es ist bekannt, bei Transportfahrzeugen entladene Batterien auszuwechseln und in einer Ladestation wieder aufzuladen. Um die Wirtschaftlichkeit derartiger Transportsysteme zu gewährleisten ist es notwendig, den Einsatz der Fahrzeuge und der Batterien zu optimieren.

Es ist bereits ein Managementsystem für batteriebetriebene Flurförderzeuge bekannt, welches über einen Rechner, bzw. eine Datenverarbeitungseinrichtung für die Bewirtschaftung der Batterien und der Fahrzeuge verfügt und für den Einsatz im Mehrschichtbetrieb bestimmt ist. Bei diesem bekannten System ist eine Batterieladestation vorhanden, welche mehrere Batterien enthält und als Batteriepool dient. Die Fahraufträge für die Transportfahrzeuge werden vom Rechner verarbeitet, und es wird ermittelt, welcher Ladungsanteil einer Batterie verbraucht wird um einen bestimmten Fahrauftrag ausführen zu können. Mit Hilfe von gespeicherten Batterieladungsdaten ermittelt der Rechner, welche Batterie eine genügend grosse Ladung aufweist, um einem Transportfahrzeug die nötige Energie abgeben zu können. Diese Batterie wird dann in ein Transportfahrzeug übergeben, und das Fahrzeug führt mit Hilfe eines Fahrzeugrechners und einer entsprechenden Steuerung den Auftrag aus.

Nach Ausführung des Fahrauftrages wird die Batterie wieder in die Ladestation übernommen und aufgeladen. Die Datenverarbeitungseinrichtung der Ladeeinrichtung enthält dabei für jede Batterie eine Datei, in welcher Ladung, Leistungsentwicklung und Alterung festgehalten werden. Die in der Ladeeinrichtung vorhandenen Batterien werden nur für Fahraufträge eingesetzt, für welche ihre Leistungsfähigkeit genügend ist. Leistungsschwache Batterien werden einer Reservegruppe zugeordnet und bei Unterschreiten eines Leistungsgrenzwertes ausgeschieden. Ein Nachteil dieses Systemes besteht darin, dass die Fahrzeuge nach jedem Fahrauftrag zur Ladestation zurückkehren und die Batterie, unabhängig vom Ladungszustand, ausgewechselt wird. Dadurch erfolgen Batteriewechsel auch, wenn das Fahrzeug noch weitere Fahraufträge ausführen könnte. Im weiteren muss in der Ladestation, welche als Pool dient, Platz für sämtliche Batterien vorhanden sein, da sonst die Zuteilung zu den Fahrzeugen erschwert wird, oder eventuell ein bestimmter Fahrauftrag nicht ausgeführt werden kann, da die verfügbaren Fahrzeuge und Batterien nicht zueinander passen. Ein weiterer Nachteil besteht darin, dass an der Ladestation, bzw. am Batteriepool eine Warteschlange von Transportfahrzeugen besteht, bis alle Batterien an die entsprechenden Fahrzeuge zugeteilt sind. Dies hat unproduktive Stillstandszeiten zur Folge und ein vollständig kontinuierlicher Ablauf ist nicht möglich.

Es ist Aufgabe der vorliegenden Erfindung, ein Verfahren und eine Vorrichtung zu schaffen, mittels welchen elektrisch betriebene Transportfahrzeuge möglichst störungsfrei in einem im Dauerbetrieb arbeitenden automatischen Transportsystem eingesetzt werden können, das System mit einem oder mehreren Transportfahrzeugen betrieben werden kann, ohne dass beim Einsatz mehrerer Fahrzeuge störende Warteschlangen entstehen, im weiteren die Ladung und Entladung und das Auswechseln der Batterien so erfolgt, dass eine optimale Lebensdauer der Batterien erreicht wird, sowie verhindert wird, dass Batterien tiefentladen werden und alle noch einsatzfähigen Batterien regelmässig nachgeladen werden und nicht einsatzfähige oder alte Batterien erkannt und soweit nötig ausgeschieden werden.

Diese Aufgabe wird bei einem Verfahren nach dem Oberbegriff des Patentanspruches 1 erfindungsgemäss durch die kennzeichnenden Merkmale dieses Patentanspruches und bei einer Vorrichtung nach dem Oberbegriff des Patentanspruches 11 nach den kennzeichnenden Merkmalen dieses Patentanspruches 11 gelöst. Vorteilhafte Weiterbildungen der Erfindung ergeben sich nach den Merkmalen der abhängigen Patentansprüche.

Mit dem erfindungsgemässen Verfahren werden verschiedene Vorteile erzielt. Die Ueberwachung der Batteriespannung und die Ermittlung des Ladezustandes der Batterien auf dem oder den Transportfahrzeugen ermöglicht es zu erkennen, wenn eine Batterie zu stark entladen wird und die Gefahr einer Tiefentladung besteht oder die Batterie so stark entladen wird, dass ein Fahrauftrag nicht mehr ausgeführt werden kann. Sobald eine zu tiefe Entladung der Batterie erkannt wird, wird die Ausführung des Auftrages des entsprechenden Transportfahrzeuges unterbrochen und falls dies ohne Gefahr der Tiefentladung noch möglich ist, automatisch zur Batteriewechselstation zurückgefahren oder das Fahrzeug wird gestoppt, Alarm ausgelöst und das Rückfahren erfolgt mit Hilfsmitteln. Dadurch wird verhindert, dass das Transportfahrzeug irgendwo auf dem Transportweg stehenbleibt und Störungen im gesamten Transportsystem auftreten. In der Batteriewechselstation wird bei der Uebernahme die entladene Batterie mit Hilfe eines Identifizierungscodes erkannt und aufgrund von Erfahrungswerten und den für diese Batterie abgespeicherten Betriebsdaten, wie zum Beispiel Einsatzzeiten, entnommene Ladung, festgestellt, ob es sich eventuell um eine alte oder nicht mehr einsatzfähige Batterie handelt welche ausgeschieden werden sollte. Ist dies der Fall, so wird die Batterie nicht mehr aufgeladen sondern ausgeschieden und durch eine einsatzfähige Batterie ersetzt. Andernfalls erfolgt ein Aufladevorgang der Batterie. Da in der Wechselstation mehrere Batterien vorhanden sind, kann mindestens eine Batterie einem Ladevorgang mit Nachladung unterzogen werden. Bei derartigen Ladevorgängen mit Nachladung wird die Sulfatisierung rückgängig gemacht, was eine Verlängerung der Lebensdauer der Batterie zur Folge hat. Während dieses Ladevorganges mit Nachladung steht diese Batterie nicht für Batteriewechsel zur Verfügung, sondern die Batteriewechsel werden mit den anderen in der Wechselstation vorhandenen Batterien ausgeführt.

Ein weiterer Vorteil besteht darin, dass die Batterien auf dem Transportfahrzeug verbleiben bis ein bestimmter Spannungs-, bzw. Ladungsgrenzwert erreicht ist oder die verfügbare Ladung der Batterie für die Ausführung eines Auftrages nicht mehr genügt. Dies wird dadurch sichergestellt, dass die Spannung der Batterie auf dem Fahrzeug bei Stillstand des Fahrzeuges in Intervallen gemessen und abgespeichert wird. Mit Hilfe von bekannten Werten welche einer bestimmten Messspannung eine bestimmte Ladung zuordnen lässt sich der Ladungszustand der Batterie jederzeit feststellen. Erhält nun das Fahrzeug einen neuen Fahrauftrag, so wird über die Datenverarbeitungseinrichtung in der Wechselstation oder im Transportfahrzeug oder einer speziellen Leitstation ebenfalls mit Hilfe von Festdaten, welche aus Erfahrungswerten gebildet sind, die für die Durchführung des Auftrages benötigte Ladung ermittelt. Ist diese kleiner als die in der Batterie noch vorhandene Ladung, so kann der Auftrag ausgeführt werden. Andernfalls wird die Batterie in der Batteriewechselstation ausgetauscht und wieder aufgeladen. Das Transportfahrzeug verfügt über gespeicherte Daten, welche die Ausführung von Fahr-, Bewegungs- und Transportaufträgen ermöglichen und soweit nötig auch die dafür benötigten Energiemengen beinhalten. Im weiteren ist die Datenverarbeitungseinrichtung des Transportfahrzeuges jederzeit in der Lage, einen korrekten Rückfahrweg zur Batteriewechselstation zu ermitteln und die entsprechenden Steuerbefehle an die Fahrzeugsteuerung zu übermitteln.

Das erfindungsgemässe System und Verfahren ermöglicht auch die zusätzliche Optimierung der Lade- und Entlade- sowie Auswechselvorgänge der Batterien, indem auf jedem Transportfahrzeug die ausgeführten Fahr-, Handling- und Transportbewegungen durch den Fahrzeugrechner erfasst, und mit Hilfe dieser Daten der Ladungsverbrauch ermittelt wird. Dieser Ladungsverbrauch kann nun über verschiedene Transport-, Handlings- und Bewegungsvorgänge kumuliert werden und entspricht der aus der Batterie entnommenen Ladung. Der Vorteil besteht nun darin, dass bei einem vorgegebenen Grenzwert für den ermittelten Ladungsverbrauch das Transportfahrzeug zur Wechselstation zurückgefahren und die Batterie ausgewechselt und aufgeladen wird. Dadurch lässt sich ein zyklisches Auf- und Entladen der Batterie erreichen, ohne dass die Batterie gegen den Bereich der Tiefentladung entladen wird. Durch das Ueberlagern einer minimalen Einsatzzeitbedingung in Kombination mit der Bedingung einer minimalen entnommenen Ladung wird trotzdem eine vorteilhafte optimale Einsatzdauer der Batterien erwirkt.

Besonders vorteilhaft ist, dass mit relativ geringem Aufwand die Ueberwachung der Batterie auf dem Transportfahrzeug und in der Wechselstation erfolgt, und sich dadurch die Möglichkeit eröffnet, die Batterien optimal einzusetzen. Die Transportfahrzeuge können durchgehend im Einsatz stehen, womit ein automatischer 24-Stunden-/ 7-Tage-Betrieb gewährleistet werden kann und erhebliche Einsparungen an Investitionskosten möglich sind. Die einzelnen Transport- und Bewegungsaufträge können an Fahrzeuge übermittelt werden, welche mit einer aufgeladenen Batterie bestückt sind oder auch an Fahrzeuge, welche bereits im Transportsystem integriert sind und noch über eine genügende Ladung der Batterie verfügen. Diese Einsatzart gewährleistet, dass die Fahrzeuge optimal eingesetzt sind und möglichst wenige Batteriewechsel notwendig werden.

Im folgenden werden die Erfindung sowie weitere Vorteile und Einzelheiten anhand von Ausführungsbeispielen unter Bezugnahme auf die beiliegenden Zeichnungen näher erläutert. Es zeigen:

Fig. 1 einen Ausschnitt aus einem automatischen Transportsystem in schematischer Darstellung

Fig. 2 ein Blockschaltbild der Ueberwachungseinrichtungen auf dem Transportfahrzeug

Fig. 3 ein Blockschaltbild der Ueberwachungs- und Steuereinrichtungen in der Batteriewechselstation

Fig. 4 einen Ablaufplan der Verfahrensschritte zur Ueberwachung der Batterie im Transportfahrzeug und

Fig. 5 einen Ablaufplan der Verfahrensschritte zum Laden und Wechseln der Batterien in der Batteriewechselstation.

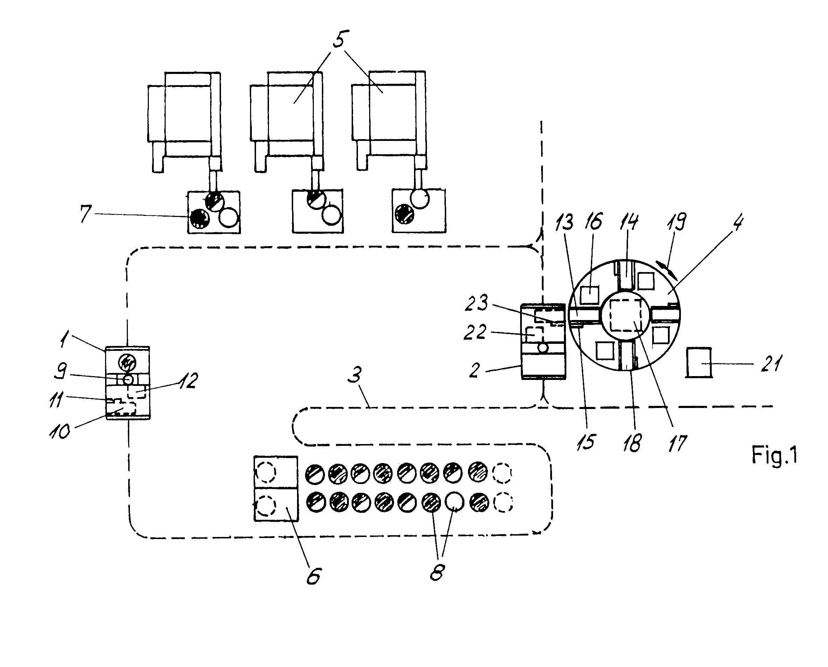

Der in Figur 1 dargestellte Ausschnitt aus einem automatischen Transportsystem zeigt einen Teil einer Fabrikationsanlage zur Bearbeitung von textilen Materialien. Solche Fabrikationsanlagen werden häufig im Dauerbetrieb betrieben, d.h. 24 Stunden im Tag und 7 Tage in der Woche. Eine gesamte Anlage umfasst eine Vielzahl von Maschinen, Bearbeitungs- und Lagerstellen, wobei in Figur 1 nur einige wenige gezeigt sind. Auf einer Fahrspur 3 bewegen sich automatisch gesteuerte Transportfahrzeuge 1 und 2, wobei in der ganzen Anlage auch noch weitere Fahrzeuge vorhanden sein können, oder bei einer kleinen Anlage nur ein einzelnes Fahrzeug vorgesehen ist. Die Fahrspur 3 wird dabei an Spinnereivorwerksmaschinen vorbeigeführt, nämlich Karden 5 und Strecken 6. Zwischen diesen Karden 5 und Strecken 6 müssen Transportbehälter 7, 8 ausgetauscht werden, welche dem Transport von Textilmaterial dienen. Die Fahrspur 3 hat noch weitere Aeste, welche dem Transport der Transportbehälter 7, 8 zu weiteren Maschinen und Lagerplätzen dieses Spinnereibetriebes dienen. Der Transport der Behälter 7, 8 erfolgt mittels der Transportfahrzeuge 1, 2, welche elektrisch angetrieben sind. Für die Energieversorgung des elektrischen Antriebes ist jedes Transportfahrzeug 1, 2 mit einer Batterie 10, 13 ausgestattet. Im weiteren befinden sich auf jedem Fahrzeug 1, 2 noch eine Leseeinrichtung 11, 23 für die Batteriekennzeichnung, eine Handlingeinrichtung 9 für das Umsetzen der Transportbehälter 7, 8 sowie die Durchführung von weiteren Aufgaben und ein Computer 12, 22, bzw. eine elektronische Datenverarbeitungseinrichtung. Im weiteren verfügen die Transportfahrzeuge 1, 2 über nicht dargestellte Antriebs- und Lenkeinrichtungen sowie eine Fahrsteuerung, welche auch das Erkennen und Abfahren der Fahrspur 3 sicherstellt.

An einem geeigneten Platz neben der Fahrspur 3 befindet sich eine Batteriewechselstation 4. Diese verfügt über mehrere, im gezeigten Beispiel vier, Batterieladeplätze 18. Zu jedem Batterieladeplatz 18 gehört ein Ladegerät 16 und eine Leseeinrichtung 15 für die Erkennung des Identifizierungscodes an jeder Batterie. Im weiteren sind nicht dargestellte Kupplungseinrichtungen und Handlingeinrichtungen für die Batterien sowie eine elektrische Stromversorgung vorhanden. Die Ueberwachung und Steuerung der Batteriewechselstation 4 erfolgt mit Hilfe eines Computers, bzw. einer elektronischen Datenverarbeitungseinrichtung 17. Im dargestellten Beispiel ist die Batteriewechselstation 4 als horizontale drehbare Scheibe ausgebildet, welche in Richtung der Pfeile 19 schwenkbar ist.

Im dargestellten Beispiel befindet sich das Transportfahrzeug 2 in einer genau definierten Wechselposition neben der Batteriewechselstation 4. Ueber eine nicht dargestellte lösbare Verbindung sind die beiden Computer 22 des Transportfahrzeuges 2 und der Computer 17 der Batteriewechselstation 4 miteinander verbunden. Die Batterie 13 in der Batteriewechselstation 4 wurde aus dem Transportfahrzeug 2 mit Hilfe von nicht dargestellten Handlingeinrichtungen automatisch entnommen. Gleichzeitig wurde mittels der Leseeinrichtung 15 der Identifizierungscode der Batterie 13 abgelesen und die Betriebsdaten der identifizierten Batterie 13 im Computer 17 abgespeichert. Die Batterie 13 ist entladen und muss normal geladen oder geladen und nachgeladen werden. Nun wird in der Wechselstation 4 die günstigste einsatzfähige Batterie bestimmt und ausgegeben. Im dargestellten Beispiel ist dies die Batterie 14. Die Batteriewechselstation 4 wird um 90° verschwenkt, so dass die Batterie 14 vor dem Batteriefach des Transportfahrzeuges 2 positioniert ist. Diese aufgeladene Batterie 14 wird jetzt in das Transportfahrzeug 2 geschoben und hier die elektrische Verbindung wieder hergestellt. Alle Betriebsdaten dieser Batterie 14 werden im Computer 22 wiederum erfasst solange sich die Batterie 14 im Transportfahrzeug 2 befindet. Ist diese Batterie 14 nach einem oder mehreren Transport-, Handling- und Arbeitsvorgängen des Transportfahrzeuges 2 soweit entladen, dass sie ausgetauscht werden muss, so können die ermittelten Betriebsdaten dieser Batterie 14 und die mit ihr ausgeführten Bewegungsvorgänge beim Wechselvorgang der Batterie über die Kommunikationsschnittstelle vom Computer 22 in den Computer 17 der Batteriewechselstation übernommen werden. Die Batteriewechselstation 4 ist im weiteren mit einer Ein-/Ausgabeeinheit 21 ausgestattet, über welche Steuerbefehle manuell eingegeben werden können. Ueber diese Ein-/Ausgabeeinheit 21 können auch die Fahr- und Arbeitsbefehle für die Transportfahrzeuge 1 und 2 in das Transportsystem eingespeist werden. Es sind aber auch andere bekannte Uebertragungsmöglichkeiten denkbar, wie zum Beispiel Infrarotsender.

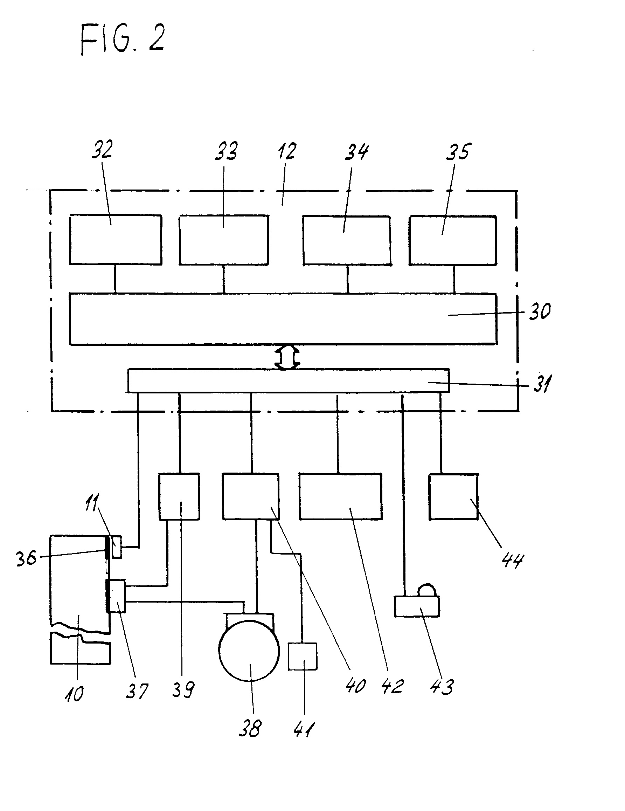

Figur 2 zeigt in einem Blockschaltbild diejenigen Mittel, welche zusätzlich zu den bekannten Einrichtungen auf den Transportfahrzeugen 1, 2 vorhanden sind um die Funktionsfähigkeit des erfindungsgemässen Transportsystemes zu gewährleisten. Der Computer 12 besteht aus einem bekannten Mikrocomputer- 30, bzw. einer Prozess-Steuereinrichtung. Dieser Mikrocomputer 30 ist mit einer Eingangs-/Ausgangseinheit 31 und verschiedenen Datenspeichern 32 bis 35 verbunden. Der Speicher 32 enthält Festdaten über die im Fahrzeug eingesetzte Batterie 10, insbesondere über den Zusammenhang des Ladungszustandes in Abhängigkeit von der Messspannung der Batterie. Im Speicher 33 werden diejenigen Batteriedaten abgelegt, welche laufend während des Betriebes des Transportfahrzeuges ermittelt werden. Es handelt sich dabei insbesondere um die momentane Ladungsmenge der Batterie, die der Batterie entnommene Ladung, den Uebernahmezeitpunkt der Batterie und die bereits ausgeführten Bewegungen des Fahrzeuges. Im Speicher 34 sind die Auftragsdaten enthalten, welche vor Beginn des Transportauftrages an das Transportfahrzeug übergeben wurden. Mit Hilfe dieser Daten folgt das Transportfahrzeug 1 der Fahrspur 3 und führt an den Maschinen 5, 6 die gewünschten Wechsel- und Bedienungsaufträge aus. Im Speicher 35 befinden sich Festdaten über die Fahrspur 3 sowie die Wechsel- und Handhabungsaufgaben, welche an den Maschinen 5 und 6 auszuführen sind. Diese Daten beinhalten unter anderem auch den Energie-, bzw. Ladungsverbrauch für die einzelnen Arbeitsschritte, so dass der Rechner 12 aufgrund der Fahrauftragsdaten den Ladungsverbrauch aus der Batterie ermitteln kann.

Mit dem Computer 12 verbunden ist eine Spannungs-Messeinrichtung 39, welche über eine elektrische Kupplung 37 mit den Batterieanschlüssen verbunden ist. Ueber diese elektrische Kupplung 37 wird mittels der Spannungs-Messeinrichtung 39 die Spannung der Batterie 10 gemessen. Die Messung erfolgt bei stillstehendem Fahrzeug, z.B. in einer Leitstation oder an einer Maschine, aber auch bei arbeitendem Fahrzeug. Die Auswertung der Messung ist jeweils unterschiedlich, bzw. erfolgt mit anderen Vergleichsdaten. Die Batterie 10 ist mit einem Identifizierungscode 36 versehen, zum Beispiel mit einem Strichcode oder einer anderen bekannten Kennzeichnungseinrichtung. Dieser Kennzeichnungscode 36 dient der Kennzeichnung jeder einzelnen Batterie, so dass jede Batterie mit den Leseeinrichtungen 11 identifiziert werden kann. Ein Antriebsmotor 38 und eventuell weitere Antriebe beziehen über die Kupplung 37 elektrischen Strom von der Batterie 10 und sind anderseits über eine Fahrsteuerung 40 wiederum mit dem Rechner 12 verbunden. Die Fahrsteuerung 40 ist mit einem Spurleser 41 ausgestattet, welcher in bekannter Weise auf optischem, induktivem oder auf anderem Wege die zu verfolgende Fahrspur erkennen kann. Die eigentlichen Daten für die abzufahrende Strecke, d.h. die entsprechenden Steuerbefehle, erhält die Fahrsteuerung 40 vom Computer 12. Im weiteren ist eine Messeinrichtung 42 für den zurückgelegten Weg des Transportfahrzeuges, welche mit nicht dargestellten Sensoren ausgestattet ist, vorhanden. Der Computer 12 erkennt und registriert die Bewegungen des Fahrzeuges und der Handlingeinrichtungen. Als Sicherheitseinrichtung verfügt der Computer 12 über eine Alarmeinrichtung 43, welche anspricht, wenn das Transportfahrzeug 1, 2 aus irgend einem Grunde den automatischen Transportauftrag nicht ausführen kann. Eine Schnittstelle 44 dient der Verbindung des Computers 12 und der mit dem Computer 12 verbundenen anderen Einrichtungen mit Einrichtungen ausserhalb der Transportfahrzeuge 1, 2. Im dargestellten Beispiel dient die Schnittstelle 44 auch als Empfangs- und Uebergabestelle für die Fahrbefehle und für die Betriebsdaten der Batterie. Diese Kombination von Einrichtungen und einem mit den geeigneten Speichern ausgestatteten Mikrocomputer erlaubt den Fahrzeugen 1, 2, ihre Fahr-, bzw. Transportaufträge vollständig autonom auszuführen. Das mit diesen Einrichtungen ausgeführte erfindungsgemässe Betriebsverfahren ermöglicht durch die laufende Ueberwachung der Spannung der Batterien, bzw. deren Ladung und die Ueberwachung aller Fahr-, Transport- und Handlingbewegungen einen Betrieb mit sehr hoher Sicherheit. Unterschreitet die Restladung der Batterie 10 einen Grenzwert, welcher im vorliegenden Beispiel mit 20 % der Nennkapazität festgelegt ist, so wird das Fahrzeug automatisch angehalten und, falls dies ohne Gefahr einer Tiefentladung möglich ist, zur Batteriewechselstation zurückgefahren. Andernfalls wird das Fahrzeug gestoppt und über die Alarmeinrichtung 43 Alarm ausgegeben. Parallel werden durch die Einrichtung 42 und den Computer 12 alle Bewegungen registriert und mit Hilfe der im Speicher 35 vorhandenen Daten die theoretisch verbrauchte Ladung ermittelt. Im weiteren wird die Batterie für den Austausch vorgemerkt, wenn die durch den Computer 12 ermittelte und der Batterie entnommene Ladung einen Minimalwert, welcher im vorliegenden Beispiele mit 20 % der Nennkapazität der neuen Batterie festgelegt ist, überschreitet. Es kann zweckmässig sein, diesem Minimalwert der Ladung noch eine minimale Einsatzdauer der Batterie zu überlagern, d.h. die Batterie wird nur ausgewechselt, wenn z.B. die Einsatzdauer mindestens zwei Stunden war. Das Fahrzeug wird dann automatisch zur Batteriewechselstation zurückgefahren.

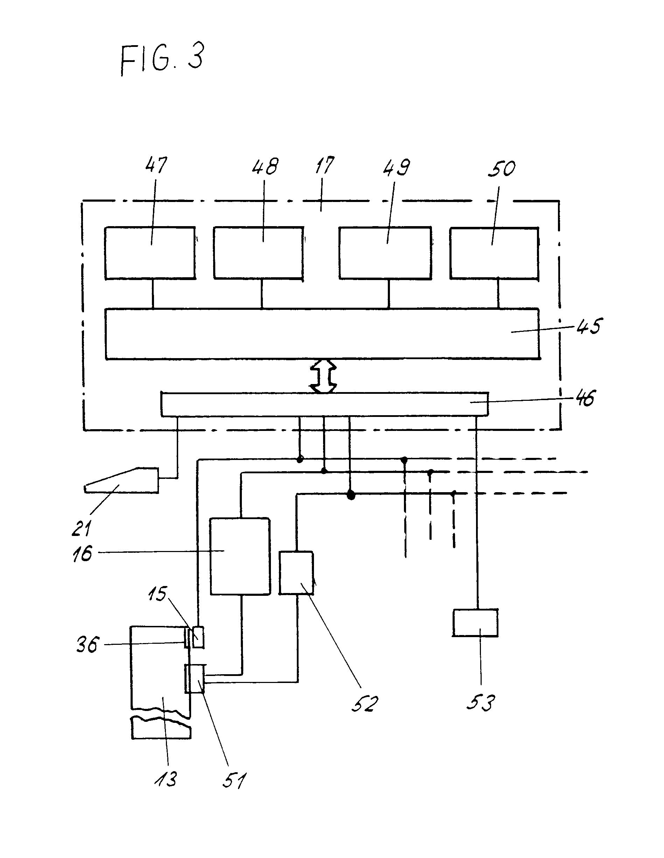

Die in Figur 3 dargestellten Einrichtungen in der Batteriewechselstation 4 umfassen ebenfalls einen Computer, bzw. eine elektronische Datenverarbeitungseinrichtung 17, welcher einen Mikrocomputer 45, eine Eingangs-/Ausgangseinheit 46 und Speicher 47 bis 50 enthält. Der Speicher 47 enthält alle Daten der Batterien, der Speicher 48 Daten über die einzelnen Ladeplätze 18 in der Wechselstation 4 und über die momentan in diesen Ladeplätzen 18 eingelagerten Batterien, der Speicher 49 enthält die noch nicht ausgeführten Fahraufträge, und der Speicher 50 Festdaten zu den Fahrwegen und Bewegungsabläufen und betreffend den Ladungsverbrauch. Der Computer 17 ist mit allen Batterieladeplätzen 18 in der Batteriewechselstation 4 verbunden, wobei im dargestellten Beispiel vier derartige Batterieladeplätze 18 vorhanden sind. Je nach Bedarf kann jedoch auch eine andere Zahl von Batterieladeplätzen 18, zum Beispiel acht, angeordnet sein, oder es können mehrere Batteriewechselstationen 4 vorhanden sein. Jeder der Batterieladeplätze 18 verfügt über eine Leseeinrichtung 15 zum Lesen der an den Batterien angeordneten Batteriekennzeichnung 36. Es kann aber auch eine zentrale, feststehende Leseeinrichtung vorgesehen sein. Ueber eine Kupplung 51 ist die Batterie 13 mit dem Ladegerät 16 und einer Strommesseinrichtung 52 verbunden. Das Ladegerät 16 liefert Daten über den Ladeverlauf an den Computer 12 und die Strommesseinrichtung 52 dient dem Vergleich und der Ueberwachung des Ladungszustandes der Batterie 13. Jeder der Batterieladeplätze 18 ist mit diesen Einrichtungen ausgerüstet. Ergänzend ist der Computer 17 noch mit einer Schnittstelle 53 ausgestattet, welche der Uebermittlung von Daten zwischen der Batteriewechselstation 4, bzw. deren Computer 17 und den Transportfahrzeugen 1, 2, bzw. deren Computern 12, 22 dient. Zusätzlich ist eine Ein-/Ausgabeeinrichtung 21 für Daten vorhanden, über welche manuell oder automatisch Ueberwachungs-, Steuer- oder andere Daten in den Computer 17 eingegeben und/oder über die Schnittstelle 53 an die Transportfahrzeuge 1, 2 übermittelt und dort abgespeichert werden können.

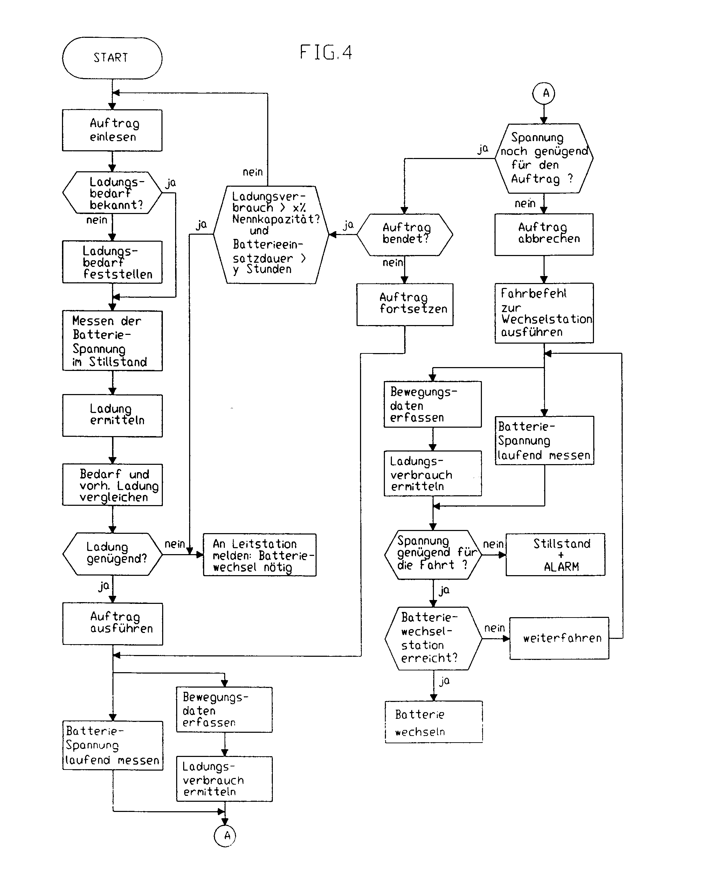

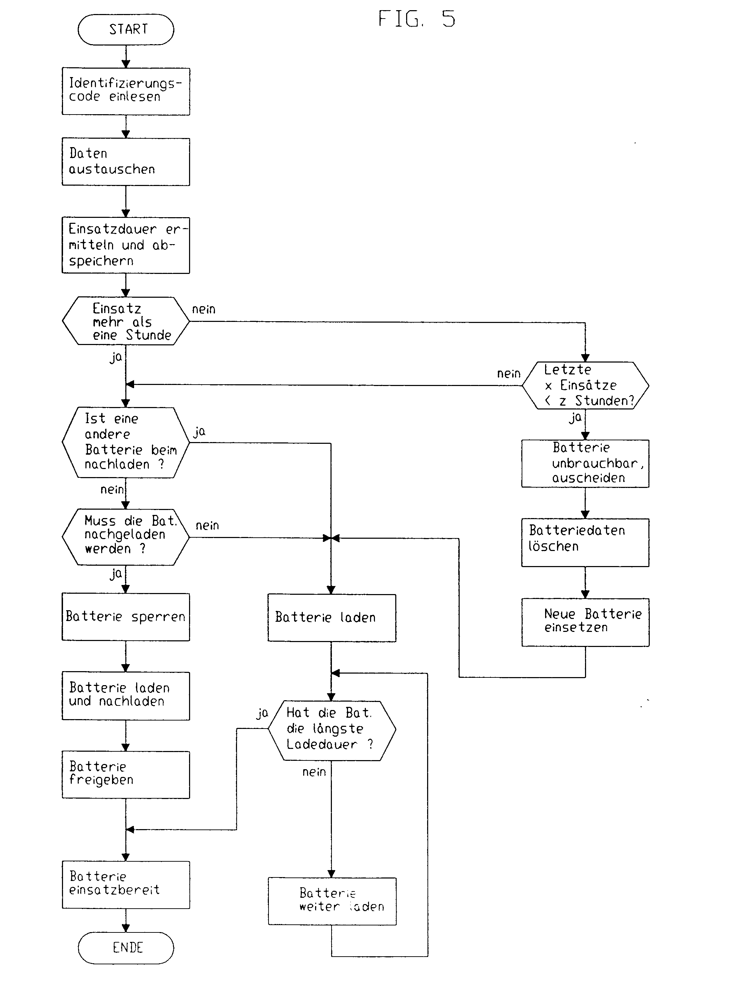

Die Durchführung des erfindungsgemässen Verfahrens soll nun anhand der in den Figuren 4 und 5 dargestellten Ablaufpläne mit Bezug auf die Figuren 1, 2 und 3 näher erläutert werden. Wie vorne zu Figur 1 erläutert, wird das Transportfahrzeug 2 mit der aufgeladenen Batterie 14 bestückt, und gleichzeitig werden über die Schnittstellen 53 und 44 die Daten für den Fahrauftrag an das Transportfahrzeug 2 übermittelt. Diese Daten werden im Computer 22 gespeichert und gleichzeitig kann über die Leseeinrichtung 23 die Kennzeichnung der Batterie 14 festgestellt werden. Sobald der Batteriewechselvorgang vollständig abgeschlossen ist und die Batteriewechselstation 4 das Transportfahrzeug 2 freigibt, führt dieses Transportfahrzeug 2 den übermittelten Auftrag autonom aus. Als erstes werden die Befehle aus dem Speicher 34 eingelesen und festgestellt, ob diese Daten auch Angaben über den benötigten Ladungsbedarf enthalten. Ist der Ladungsbedarf nicht bekannt, so wird mit Hilfe der Festdaten im Speicher 35 der Ladungsbedarf, welcher der Batterie 14 entnommen werden muss um den eingelesenen Auftrag auszuführen errechnet und festgestellt. Sobald der Ladungsbedarf zur Ausführung des Auftrages bekannt ist, wird dieser mit der in der Batterie vorhandenen und nutzbaren Ladung verglichen und festgestellt, ob die vorhandene Ladung für die Ausführung des Auftrages genügt oder nicht. Die Ermittlung der aus der Batterie 14 verfügbaren Ladung erfolgt durch Messen der Spannung im Stillstand des Fahrzeuges 2 und Vergleich mit den im Speicher 32 des Computers 22 vorhandenen Festdaten. Sollte die in der Batterie 14 gespeicherte Ladung zur Ausführung des Auftrages wider Erwarten nicht genügen, so erfolgt eine Rückmeldung an die Leitstation, und das Transportfahrzeug 2 wird wieder an die Batteriewechselstation 4 gekoppelt und die Batterie 14 gegen eine andere Batterie ausgewechselt. Da es sich bei der Batterie 14 um eine aufgeladene Batterie handelt, ist die vorhandene Ladung genügend um den Auftrag auszuführen. Das Transportfahrzeug 2 beginnt nun mit der automatischen Ausführung aller Fahr-, Handling- und Transportbefehle. Während der Ausführung des Auftrages wird in Intervallen die Spannung der Batterie 14 gemessen. Aufgrund von Festdaten im Batteriedatenspeicher 32 des Computers 22 wird festgestellt, ob die der gemessenen Spannung entsprechende Ladung der Batterie für die weitere Ausführung des Auftrages noch genügt. Dies ist möglich, weil bekannt ist, dass bei abnehmender Ladung der Batterie auch die Spannung abnimmt und diese Daten für bestimmte Batterietypen und -grössen ermittelt und als Festdaten gespeichert werden können. Durch diese laufende Ueberprüfung wird sichergestellt, dass übermässige Ladungsentnahmen, welche nicht den ursprünglichen Annahmen entsprechen erkannt und das Fahrzeug vor Erreichen einer Tiefentladung der Batterie 14 an die Batteriewechselstation 4 zurückgeschickt werden kann. Parallel dazu werden über die Messeinrichtung 42 der abgefahrene Weg und die ausgeführten Bewegungen und Transportvorgänge ermittelt und registriert. Mit Hilfe der Festdaten im Speicher 35 wird der Ladungsverbrauch für die bereits ausgeführten Bewegungen und Vorgänge errechnet und kumuliert. Dieser kumulierte Wert wird laufend mit den vorgegebenen abgespeicherten Werten verglichen, und bei Feststellung einer zu grossen Abweichung wird diese Information im Speicher 32 oder 33 abgelegt und bei Serviceüberprüfungen untersucht. Sie kann jedoch in nicht dargestellter Weise auch dazu dienen, eine Alarmstufe einzuschalten, welche bei zu rascher Abnahme der Ladung in der Batterie 14 die Ausführung des Auftrages abbricht und das Transportfahrzeug 2 an die Batteriewechselstation 4 zurückfährt. Nach jedem Ueberwachungsintervall der Ladung der Batterie wird geprüft, ob der Auftrag beendet ist. Ist dies der Fall, so fährt das Transportfahrzeug 2 automatisch zurück zur Batteriewechselstation 4, um einen neuen Auftrag zu übernehmen. Ist der Auftrag noch nicht beendet, so werden die Auftragsbefehle weiter ausgeführt, bis der Auftrag abgeschlossen ist. Kehrt das Transportfahrzeug 2 nach Ausführung des Auftrages zur Batteriewechselstation 4 zurück und ist der Auftrag beendet, so wird mit Hilfe der Batterie-und Bewegungsdaten in den Speichern 33 und 35 geprüft, ob der Ladungsverbrauch eine bestimmte Grösse überschritten hat und die Batterie länger als eine minimale Vorgabezeit im Einsatz war. Sind beide Grenzwerte überschritten, wird ein Batteriewechsel veranlasst, bzw. eine entsprechende Meldung an die Leitstation ausgegeben. Dieser Vorgang ist weiter unten im Detail beschrieben. Sind die Grenzwerte nicht überschritten, wird über die Schnittstelle 44 ein neuer Fahrauftrag übermittelt. Der Computer 22 ermittelt erneut wie oben beschrieben, ob die in der Batterie 14 noch vorhandene Ladung für die Ausführung dieses neuen Auftrages genügt. Wenn ja, führt das Transportfahrzeug 2 diesen Auftrag wiederum aus.

Die oben beschriebene laufende Ueberwachung der Batteriespannung dient auch dazu, ein Absinken der Spannung, bzw. der Ladung der Batterie unter minimal 20 % der Nennkapazität der Batterie 14 festzustellen. Bei Erreichen dieses Wertes wird der Auftrag abgebrochen, und das Transportfahrzeug 2 kehrt zur Batteriewechselstation 4 zurück, unabhängig davon, ob ein Auftrag fertig ausgeführt ist oder nicht. Dies um zu verhindern, dass die Batterie 14 tiefentladen wird.

Bekanntlich kann die Lebensdauer der Batterien erhöht werden, wenn diese mit einer geringeren Entladetiefe betrieben werden und nicht immer bis auf den tiefsten zulässigen Wert der Ladung entladen wird. Es ist deshalb vorteilhaft, wenn die Batterie 14 im Transportfahrzeug 2 mit einer geringeren Entladetiefe, zum Beispiel jeweils mit einem Wert x von 20 % der ursprünglichen Nennkapazität der Batterie betrieben, und dann jeweils wieder aufgeladen wird. Dazu wird der kumulierte errechnete Ladungsentnahmewert und die in den Speichern 32 oder 33 gespeicherten Werte überwacht und bei Erreichen dieser 20 % Schwelle das Fahrzeug für einen Batteriewechsel bestimmt. Dieser Batteriewechsel wird jedoch nur dann ausgeführt, wenn das Transportfahrzeug 2 für die Zeit y beispielsweise mindestens zwei Stunden im Einsatz war. Dazu ist diesen Steuerelementen ein Zeitglied überlagert, welches in Kombination mit den kumulierten Ladungsentnahmewerten ausgewertet wird.

Wird der Auftrag des Fahrzeuges 2 ordnungsgemäss ausgeführt, so ist die Rückfahrt zur Wechselstation 4 oder zu einer nicht dargestellten Leitstation Bestandteil des Auftrages. Das Fahrzeug 2 befindet sich somit am Ende des Auftrages bei der Wechselstation 4 oder einer Leitstation. Wird der Auftrag wegen Unterschreiten des Spannungsgrenzwertes, bzw. der minimal notwendigen Ladung abgebrochen, so werden nur noch die Fahrbefehle welche zur Wechselstation 4 zurückführen ausgeführt. Während der Rückfahrt des Fahrzeuges 2 zur Wechselstation 4 werden weiterhin die Spannung überwacht und die Bewegungsdaten erfasst. Dies, bis die Wechselstation 4 erreicht ist. Unterschreitet die Spannung der Batterie während der Rückfahrt einen zweiten und tieferen Grenzwert, so wird das Fahrzeug 2 gestoppt und die Alarmeinrichtung 43 ausgelöst. Dies stellt jedoch eine Ausnahme dar, und das Fahrzeug 2 muss dann mit Hilfsmitteln zur Wechselstation 4 zurückgebracht werden.

Anhand der Batterie 13, welche dem Transportfahrzeug 2 in der Batteriewechselstation 4 entnommen wurde, kann mit Hilfe des in Figur 5 dargestellten Ablaufplanes das erfindungsgemässe Verfahren weiter erläutert werden. Mit der Uebernahme der Batterie 13 in die Batteriewechselstation 4, wird der Identifizierungscode 36, welcher an der Batterie 13 angebracht ist gelesen und gleichzeitig werden über die Schnittstelle 53 die im Transportfahrzeug 2 zu der Batterie 13 gespeicherten Daten vom Rechner 17 übernommen und im Speicher 47 abgelegt. Als erstes wird nun durch einen Datenvergleich die Einsatzdauer festgestellt und geprüft, ob die Batterie 13 beispielsweise länger als eine Stunde im Einsatz war oder nicht. Ist dies der Fall, so wird sie für das Aufladen freigegeben. Beträgt die Einsatzzeit weniger als eine Stunde so wird im beschriebenen Beispiel aufgrund der Vergangenheitsdaten dieser Batterie 13 festgestellt, ob die vergangenen fünf letzten Einsätze (Wert x) alle kürzer als eine Stunde (Wert z) waren. Je nach Batterietyp und Einsatzbedingungen können andere Werte dieser Grenzbedingungen zur Anwendung gelangen. Wenn die genannten Grenzwerte erreicht sind, so gilt die Batterie als alt und für den weiteren Einsatz in diesem Transportsystem nicht mehr geeignet. Die als unbrauchbar erkannte Batterie 13 wird dann aus der Batteriewechselstation 4 entfernt und an ihrer Stelle eine neue Batterie in die Wechselstation 4 eingebracht und aufgeladen. Gleichzeitig werden alle Batteriedaten dieser Batterie 13 gelöscht. Wenn weniger als fünf aufeinanderfolgende Einsätze kürzer als eine Stunde waren, kann die Batterie noch einmal zur Aufladung freigegeben werden, da Kurzeinsätze auch durch extreme Belastungen, d.h. grossen Ladungsverbrauch erzeugt werden können. Bei der Aufladung der Batterien in der Batteriewechselstation 4 wird davon ausgegangen, dass diese in Intervallen vollständig aufgeladen werden, und zwar vorerst mit konstantem Strom, dann mit konstanter Spannung und anschliessend in einer Nachladephase mit konstantem Strom und beschränkter Zeit. Dieses Vorgehen gewährleistet wiederum eine Erhöhung der Einsatzfähigkeit der Batterie, da in der Nachladephase die Sulfatisierung rückgängig gemacht werden kann. Da ein Aufladezyklus mit Nachladung relativ viel Zeit erfordert, können nicht alle Batterien in der Batteriewechselstation 4 nach jedem Wechselvorgang vollständig aufgeladen werden. Deshalb wird im beschriebenen Beispiel festgelegt, dass jeweils nur eine Batterie mit einem Aufladezyklus mit Nachladung aufgeladen wird. Die anderen Batterien werden nur solange aufgeladen, bis sie benötigt werden, wobei der Abbruch der Aufladung bereits in der ersten Phase mit konstantem Strom oder später in der zweiten Phase mit konstanter Spannung erfolgen kann. Vor Beginn der Aufladung der Batterie 13 wird deshalb geprüft, ob bereits eine der anderen Batterien, welche sich in den Batterieladeplätzen 18 befindet, mit einem Nachladezyklus aufgeladen wird. Ist dies der Fall, so wird die Batterie 13 aufgeladen und freigegeben, sobald sie für einen Wechselvorgang benötigt wird. Wird keine andere Batterie mit einem Zyklus mit Nachladephase aufgeladen, so wird mit Hilfe einer im Batteriedatenspeicher 47 geführten Liste geprüft, ob die Batterie 13 nachgeladen werden muss. Dies ist dann der Fall, wenn sie noch nicht in dieser Liste der bereits nachgeladenen Batterien eingetragen ist. Nach Abschluss der Nachladung wird die Batterie 13 ebenfalls in diese Liste eingetragen. Sobald alle einsatzfähigen Batterien in der Liste registriert worden sind, d.h. einmal nachgeladen wurden, wird die Liste gelöscht, und der Registriervorgang beginnt von neuem. Ausgeschiedene Batterien werden sofort aus der Liste gelöscht. Diese Listenkontrolle gewährleistet, dass jede Batterie in einem Zyklus nachgeladen wird. Wird die Batterie 13 für einen Aufladezyklus mit Nachladung freigegeben, so wird sie in der Batteriewechselstation 4 gesperrt, bis diese Aufladung mit Nachladephase vollständig durchgeführt ist. Für Batteriewechselvorgänge zwischen der Batteriewechselstation 4 und den Transportfahrzeugen 1 und 2 stehen während dieser Zeit nur die in den anderen drei Batterieladeplätzen 18 eingelagerten Batterien zur Verfügung. Bei den weiteren Wechselvorgängen wird jeweils diejenige Batterie ausgegeben, welche die längste Verweilzeit in der Batteriewechselstation 4 aufweist.

Es ist offensichtlich, dass durch diese Art der Ueberwachung der Batterie 14 auf dem Transportfahrzeug 2 eine hohe Betriebssicherheit und damit ein störungsfreier Betrieb des ganzen Transportsystemes gewährleistet wird. Die Anzahl der eingesetzten Transportfahrzeuge ist nicht beschränkt, da je nach Bedarf eine grössere Anzahl von Ladeplätzen 18 in der Batteriewechselstation 4 oder mehrere Batteriewechselstationen 4 angeordnet werden können. Die Ueberwachung der Batterien in den Fahrzeugen und die erfindungsgemässe Durchführung der Batteriewechsel ermöglicht die optimale Ausschöpfung der möglichen Batterielebensdauer und damit eine Erhöhung der Wirtschaftlichkeit des Systemes.

**Patentansprüche**

1.  Verfahren zum Ueberwachen und Steuern des Lade-/Entladevorganges und des Batteriewechsels von auswechselbaren Batterien bei einem elektrisch angetriebenen Transportfahrzeug, welches Teil eines im Dauerbetrieb arbeitenden, automatischen Transportsystemes ist, wobei im Transportsystem eine Batteriewechselstation mit mehreren Ladeeinrichtungen vorhanden ist und diese Wechselstation vom Transportfahrzeug angefahren wird, die Batterien in dieser Wechselstation ausgetauscht und aufgeladen werden, im Transportfahrzeug und in der Wechselstation mittels elektronischer Datenverarbeitungs-Einrichtungen Betriebsdaten gespeichert sind und erfasst werden, und dem Transportfahrzeug über eine Leitstation Aufträge, insbesondere Fahr-, Transport- und Handlingaufträge übermittelt werden, dadurch gekennzeichnet, dass im Transportfahrzeug die Ladung der Batterien des Fahrzeuges laufend überwacht und der jeweilige Wert gespeichert wird, bei Unterschreiten einer minimalen Restladung oder einer für die Ausführung eines Auftrages notwendigen Restladung, die Ausführung des Auftrages unterbrochen wird und das Transportfahrzeug gestoppt und mit Hilfsmitteln oder automatisch zur Batteriewechselstation gefahren wird, dort die entladene Batterie vom Transportfahrzeug an die Wechselstation übergeben wird, in der Wechselstation ein Identifizierungscode der entladenen Batterie abgelesen und in der Datenverarbeitungs-Einrichtung gespeicherte Vergangenheitsdaten dieser identifizierten Batterie überprüft werden, aus diesen gespeicherten Vergangenheitsdaten dieser Batterie bestimmt wird ob diese Batterie ausgeschieden werden muss, andernfalls die Batterie aufgeladen und für einen weiteren Einsatz in einem Transportfahrzeug bereitgestellt wird, und in der Wechselstation immer mindestens eine Batterie einen Ladevorgang mit einer Nachladephase durchläuft oder alle Batterien in der Wechselstation nachgeladen sind.

2. Verfahren nach Patentanspruch 1, dadurch gekennzeichnet, dass am stillstehenden Transportfahrzeug die Spannung der Batterien gemessen, durch Vergleich mit Standardwerten aus einem Festdatenspeicher der Datenverarbeitungseinrichtung die, dem Standardwert entsprechende, noch verfügbare Ladung der Batterie festgestellt und dieser Ladungswert in einem Zwischenspeicher der Datenverarbeitungseinrichtung des Transportfahrzeuges gespeichert wird, vor der Ausführung eines Auftrages mit den Auftragsdaten und den in der Datenverarbeitungs-Einrichtung gespeicherten Festwerten die benötigte Ladungsentnahme aus der Batterie errechnet wird, die für den auszuführenden Auftrag notwendige Ladungsentnahme aus der Batterie mit der verfügbaren Ladung verglichen und festgestellt wird ob diese zur Ausführung des Fahrauftrages genügt, bei genügend grosser Ladung der Batterie von der Datenverarbeitungseinrichtung Steuerdaten für die Ausführung des Fahrauftrages abgerufen und an eine Antriebssteuerung übertragen und der Fahrauftrag ausgeführt wird, oder bei ungenügender Ladung der Batterie von der Datenverarbeitungs-Einrichtung Steuerdaten für den Rückfahrweg zur Wechselstation abgerufen und an die Antriebssteuerung übertragen werden, das Transportfahrzeug zur Batteriewechselstation gefahren und nach Erreichen der Batteriewechselstation die Batterie mit ungenügender Ladung durch eine aufgeladene Batterie ersetzt wird.

3. Verfahren nach Patentanspruch 1 oder 2, dadurch gekennzeichnet, dass die Spannung der Batterien im Transportfahrzeug in vorgegebenen Zeitintervallen gemessen und mit, in der Datenverarbeitungseinrichtung gespeicherten festen Grenzwerten verglichen wird, bei Unterschreiten eines einer minimalen Restladung entsprechenden, unteren Spannungsgrenzwertes der Batterie der Antriebssteuerung automatisch die Steuerbefehle für den Rückweg zur Wechselstation zugeführt und das Fahrzeug automatisch zur Batteriewechselstation zurückgefahren wird.

4. Verfahren nach einem der Patentansprüche 1 bis 3, dadurch gekennzeichnet, dass im Transportfahrzeug in einem zweiten Mess- und Steuerkreis während der Durchführung des Fahrauftrages der abgefahrene Weg gemessen und die ausgeführten Transportbewegungen erfasst, diese Daten dem Datenverarbeitungsgerät zugeführt und mit Hilfe von vorgegebenen Ladungsverbrauchsdaten die jeweilige Ladungsabnahme der Batterie errechnet und über alle ausgeführten Bewegungen des Fahrzeuges kumuliert wird und wenn der kumulierte Wert gleich oder grösser als ein vorgegebener Ladungsgrenzwert ist, und die Einsatzzeit der Batterie einen vorgegebenen Wert übersteigt, die Ausführung von Fahraufträgen abgebrochen und das Transportfahrzeug zur Wechselstation zurückgefahren wird.

5. Verfahren nach Patentanspruch 4, dadurch gekennzeichnet, dass eine Batterie ausgetauscht wird, wenn der kumulierte Ladungsgrenzwert grösser ist als 20% der Nennkapazität der neuen Batterie und die Batterie mindestens zwei Stunden im Transportfahrzeug eingesetzt wurde.

6. Verfahren nach Patentanspruch 1, dadurch gekennzeichnet, dass eine Batterie ausgeschieden wird und nicht mehr einsatzfähig ist, wenn mehrere aufeinander folgende Einsatzzeiten der Batterie jeweils einen minimalen Vorgabewert unterschreiten.

7. Verfahren nach Patentanspruch 6, dadurch gekennzeichnet, dass die Batterie ausgeschieden wird, wenn die letzten fünf Einsatzzeiten je kürzer als eine Stunde sind.

8. Verfahren nach Patentanspruch 1 wobei das Laden der Batterien in der Wechselstation in einem Grundzyklus mit konstantem Strom, dann mit konstanter Spannung und anschliessend noch einmal mit konstantem Strom erfolgt, dadurch gekennzeichnet, dass die Batterien während der Fahr- und Transportaufträge jeweils auf maximal 20% ihrer Nennkapazität entladen und dann in der Wechselstation in einem Normalzyklus wieder aufgeladen werden, welcher mindestens einen Teil einer ersten Phase mit konstantem Strom und bei genügend langer Ladezeit mindestens einen Teil einer zweiten Phase mit konstanter Spannung umfasst.

9. Verfahren nach Patentanspruch 8, dadurch gekennzeichnet, dass die Batterie nach einem Einsatz auf dem Transportfahrzeug mindestens einmal im Normalzyklus aufgeladen und anschliessend ein Ladevorgang mit einer zeitlich begrenzten Nachladephase eingeschaltet wird, wobei der Strom konstant ist.

10. Verfahren nach Patentanspruch 1, dadurch gekennzeichnet, dass in einem Ladezyklus mit einer Vielzahl von Ladevorgängen jede im System vorhandene und einsatzfähige Batterie nur einmal einen Ladevorgang mit Nachladung durchläuft, und wenn alle Batterien einmal nachgeladen sind, ein weiterer Ladezyklus beginnt, in welchem jede der Batterien mehrmals aufgeladen wird, jedoch wiederum nur einmal einen Ladevorgang mit Nachladung durchläuft.

11. Verfahren nach Patentanspruch 1, dadurch gekennzeichnet, dass die Verweilzeit aller in der Wechselstation vorhandenen Batterien festgestellt, bei jedem Batteriewechselvorgang aus den sich in einem Ladevorgang befindlichen Batterien diejenige Batterie mit der längsten Verweilzeit ausgewählt und diese Batterie an das Transportfahrzeug übergeben wird.

12. Vorrichtung zum Steuern des Lade-/Entladevorganges und des Batteriewechsels von auswechselbaren Batterien bei elektrisch angetriebenen Transportfahrzeugen (1, 2) eines, im Dauerbetrieb arbeitenden Transportsystemes, wobei dieses Transportsystem eine Batteriewechselstation (4) mit Ladeeinrichtungen (16) für mehrere Batterien (10, 13, 14) aufweist, dadurch gekennzeichnet, dass jede der Batterien (10, 13, 14) einen eigenen Identifizierungscode (36) aufweist, am Transportfahrzeug (1, 2) und in der Wechselstation (4) je eine Leseeinrichtung (11, 15) zur Identifizierung der Batterien (10, 13, 14) angeordnet ist, jede dieser Leseeinrichtungen (11, 15) mit einer elektronischen Datenverarbeitungs-Einrichtung (12, 22, 17) verbunden ist, die Datenverarbeitungs-Einrichtung (12, 22) am Transportfahrzeug (1, 2) mit einer Messeinrichtung (39) für die Spannung der Batterien (10, 13) verbunden ist und die Datenverarbeitungseinrichtung (17) in der Batteriewechselstation (4) mit den Steuereinrichtungen der Ladegeräte (16) für die Batterien (13, 14) verknüpft ist und einen Datenspeicher (47) für die Verweilzeit der Batterien (13, 14) in der Batteriewechselstation (4) und den Ladungszustand der Batterien sowie einen Datenspeicher (48) für den Zustand der Ladeplätze aufweist.

13. Vorrichtung nach Patentanspruch 12, dadurch gekennzeichnet, dass die Datenverarbeitungs-Einrichtung (12, 22) im Transportfahrzeug (1, 2) über einen ersten Speicher (35) mit Fahrstreckendaten und Bewegungsdaten, einen zweiten Speicher (32) mit Standard- Kapazitätsdaten der Batterien und einen dritten Speicher (33) für die Zustandsdaten der Batterie verfügt, zudem eine Empfangseinrichtung und eine Schnittstelle (44) für die Uebernahme von Auftragsdaten sowie Abgabe von Betriebsdaten vorhanden ist und die Datenverarbeitungs-Einrichtung (12, 22) mit einer Steuerung (40) für den Fahrantrieb (38) und den Lenkantrieb des Transportfahrzeuges (1, 2) verbunden ist.

14. Vorrichtung nach Patentanspruch 12, dadurch gekennzeichnet, dass die Datenverarbeitungs-Einrichtung (17) der Wechselstation (4) mit einer Empfangs- und Sendeeinrichtung (53) für die Uebertragung von Daten zwischen den Transportfahrzeugen (1, 2) und der Wechselstation (4) ausgestattet ist.

15. Vorrichtung nach Patentanspruch 12, dadurch gekennzeichnet, dass mehrere Transportfahrzeuge (1, 2) und/oder mehrere Wechselstationen (4) vorhanden sind.

Fig.1

FIG. 2

FIG. 3

FIG.4

FIG. 5

```
                 ┌─────────┐
                 │  START  │
                 └─────────┘
                      │
                      ▼
          ┌──────────────────────┐
          │ Identifizierungs-    │
          │ code einlesen        │
          └──────────────────────┘
                      │
                      ▼
          ┌──────────────────────┐
          │ Daten                │
          │ austauschen          │
          └──────────────────────┘
                      │
                      ▼
          ┌──────────────────────┐
          │ Einsatzdauer er-     │
          │ mitteln und ab-      │
          │ speichern            │
          └──────────────────────┘
                      │
                      ▼
              Einsatz              nein
              mehr als      ─────────────────────┐
              eine Stunde                         │
                  │ ja                            ▼
                  │                        Letzte       nein
                  │              ┌───── x Einsätze  ◄──────┐
                  │              │       < z Stunden?      │
                  ▼              │          │ ja           │
          Ist eine               │          ▼              │
          andere        ja       │   ┌──────────────┐      │
          Batterie beim ─────┐    │   │ Batterie     │      │
          nachladen ?        │    │   │ unbrauchbar, │      │
              │ nein         │    │   │ auscheiden   │      │
              ▼              │    │   └──────────────┘      │
          Muss die Bat.  nein│    │          │              │
          nachgeladen   ─────┤    │          ▼              │
          werden ?           │    │   ┌──────────────┐      │
              │ ja           │    │   │ Batteriedaten│      │
              ▼              │    │   │ löschen      │      │
      ┌──────────────┐       │    │   └──────────────┘      │
      │ Batterie     │   ┌──────────┐     │                 │
      │ sperren      │   │ Batterie │     ▼                 │
      └──────────────┘   │ laden    │  ┌──────────────┐     │
              │          └──────────┘  │ Neue Batterie│     │
              ▼               │        │ einsetzen    │     │
      ┌──────────────┐        │        └──────────────┘     │
      │ Batterie laden│       │                             │
      │ und nachladen │       ▼                             │
      └──────────────┘    Hat die Bat.   ja                 │
              │           die längste  ───────┐             │
              ▼           Ladedauer ?         │             │
      ┌──────────────┐        │ nein          │             │
      │ Batterie     │        │               │             │
      │ freigeben    │        ▼               │             │
      └──────────────┘  ┌──────────────┐      │             │
              │ ◄────────│ Batterie     │      │             │
              │          │ weiter laden │      │             │
              ▼          └──────────────┘      │             │
      ┌──────────────┐                                        
      │ Batterie     │
      │ einsatzbereit│
      └──────────────┘
              │
              ▼
          ┌─────────┐
          │  ENDE   │
          └─────────┘
```

Europäisches
Patentamt

EUROPÄISCHER
RECHERCHENBERICHT

Nummer der Anmeldung

EP 91 11 4721

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 832 840 (INDUSTRIE AUTOMATION MIKROELEK-TRONIK GMBH) <br> * das ganze Dokument * * <br> – – – | 1-15 | B 60 L 11/18 |
| A | GB-A-2 219 151 (ULO-WERK MORITZ ULLMANN GMBH) <br> * Zusammenfassung; Abbildung 2 * * <br> – – – | 1,8-10,12 | |
| A | EP-A-0 315 210 (J. DAVIDOVITCH) <br> * Zusammenfassung; Abbildung 1 * * <br> – – – – – | 1,12 | |

**RECHERCHIERTE SACHGEBIETE (Int. Cl.5)**

B 60 L
B 60 K
H 02 J

Der vorliegende Recherchenbericht wurde für alle Patentansprüche erstellt

| Recherchenort | Abschlußdatum der Recherche | Prüfer |
|---|---|---|
| Den Haag | 16 Dezember 91 | BEYER F. |

KATEGORIE DER GENANNTEN DOKUMENTE
X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie,
übereinstimmendes Dokument